(19)

Europäisches
Patentamt
European
Patent Office
Office européen
des brevets

(11) **EP 4 260 931 A1**

(12) **EUROPEAN PATENT APPLICATION**

(43) Date of publication:
**18.10.2023   Bulletin 2023/42**

(21) Application number: **22000101.0**

(22) Date of filing: **12.04.2022**

(51) International Patent Classification (IPC):
**B01D 53/14** (2006.01)        **C04B 18/16** (2023.01)
**C04B 28/10** (2006.01)        **C04B 40/02** (2006.01)
**C04B 40/00** (2006.01)        **C04B 7/36** (2006.01)
**C04B 111/00** (2006.01)

(52) Cooperative Patent Classification (CPC):
**B01D 53/1475; C04B 7/367; C04B 18/16;
C04B 28/10; C04B 40/0071; C04B 40/0231;**
B01D 2257/504; C04B 2111/00017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Harmony Dynamics Sp. z o.o.
80-755 Gdansk (PL)**

(72) Inventor: **Kolkov, Roman
61204 Kharkiv city (UA)**

(74) Representative: **Czub, Krzysztof
Kancelaria Prawa Wlasnosci Przemyslowej i
Prawa Autoskiego Teresa Czub & Krzysztof
Czub Rzecznicy Patentowi Spólka Partnerska
PO Box 12
80-700 Gdansk 2 (PL)**

(54) **A METHOD FOR PURIFICATION OF FUME GASES FROM CARBON DIOXIDE BY CARBONIZATION OF SMALL-PIECE PRESSED PRODUCTS FROM MIXTURES CONTAINING LIME AND A DEVICE FOR ITS IMPLEMENTATION**

(57)     A method for purification of fume gases from carbon dioxide ($CO_2$) by carbonizing small-piece moulded products from lime-containing mixtures, characterized in that carbonization is conducted in at least two carbonization chambers (CCs) in two stages:
- at the first stage of intensive purification, a series of working cycles is conducted, each of which includes supplying a portion of fume gases in CC, that is filled with small-piece moulded products, with an overpressure selected from the interval Q1 stg = $0.3 \div 0.8$ MPa, holding until reaching the level of reduction in the CO2 concentration in the fume gases selected from the interval $40 \div 80\%$, and ejection of the purified portion of fume gases into the atmosphere, the first stage is completed upon reaching the duration of one working cycle selected in advance from the interval of 20-60 minutes;
- at the second stage, the small-piece moulded products are kept in the CC while maintaining the pressure that is more than twice higher (Q2 stg>2Ql stg) in comparison with the pressure at the first stage of carbonization, with periodic bypassing of fume gases into the CC in which the first stage of carbonization is carried out, and the preparation of the molding mixture is produced by repeated compaction by rolling a thick layer with a roll and its ripping in a high-speed roller mixer-activator of cy-cyclic action, and the moulded small-piece moulded products are hollow with a hollowness of at least 20%.
     In a device for implementing a method, comprising at least two CCs connected by pipelines to a receiver compressed to the required pressure of fume and a pipe for ejecting purified fume into the atmosphere, characterized in that it has an additional pipeline connecting all CCs, each of which is connected to an additional pipeline (28) by two connecting lines equipped with lockup valves (29, 30), and one of each pair of connecting lines is equipped with an additional pressure reducing valve (32, 33).

**Fig. 4**

**Description**

FIELD OF THE INVENTION

The present invention relates to the field of fume gases purification, which are formed as a result of fuel combustion in various process units of the metallurgical industry, furnaces of the building materials industry, various kinds of boiler houses and other devices, by absorption of carbon dioxide from fume gases by small-piece building materials products that contain lime (hereinafter - products) - blocks, bricks, etc. Carbon dioxide (hereinafter referred to as $CO_2$), captured from fume gases (hereinafter referred to as fume), as a result of the carbonization reaction, forms secondary calcium carbonate ($CaCO_3$) with lime hydrate ($Ca(OH)_2$), thereby ensuring the solidification of products formed in a closed pressing molds on a press from a mixture containing lime and carbonate aggregate. First of all, such a fume purification process combines the capture and disposal of $CO_2$, and secondly, it ensures the solidification of products without additional fuel consumption. Replacing the traditional heat-moisture treatment, that augments the emission of $CO_2$, for solidification of widely used small-piece building products by artificial carbonization will make it possible to utilize a significant amount of carbon dioxide, the excess of which causes a greenhouse effect in the atmosphere.

DESCRIPTION OF BACKGROUND INFORMATION

Numerous methods are known for capturing carbon dioxide, the excess of which generates a greenhouse effect from an atmosphere saturated with it, in particular, from fume gases, for subsequent utilization (burial) of $CO_2$ [see: Akhmetova, V. R., Smirnov, O. V., 2020, -[Carbon dioxide capture and storage - problems and perspectives], [Bashkir Chemical Journal], tom 27, No. 3, pp. 103-115; Sham, P.I., 2003, Vliyanie uglekislogo gaza atmosfery Zemli na poteplenie klimata [Influence of carbon dioxide of The earth's atmosphere on climate warming], Vestnik Priazovskogo Gosudarstvennogo Tekhnicheskogo Universiteta [Bulletin of Priazovsk State Technical University], No. 13, pp. 89-95]. Most of the methods are based on various options for using the sorption effect - the absorption of $CO_2$ by various sorbents. Lime is often used as a sorbent, for example, lime contained in small-piece building products formed in a mold. The absorption of $CO_2$ by such products (carbonization) leads to their solidification under certain conditions: the utilization of $CO_2$ is accompanied by an additional useful effect. Analogous methods implement the carbonization process, which consists of two components: saturation of the lime included in the products with carbon dioxide and solidification of the formed secondary carbonate, with strengthening of its binding with aggregates, primarily containing primary carbonate.

According to patent RU 2018/2673485, one analog can be distinguished among others, for example, a method for manufacturing small-piece carbonized products from a mixture based on a carbonate filler, including: preparing the mixture for molding using mechanical activators, by intensive processing (grinding) by compression, shear, and impact; products forming by molding at a pressure of $15 \div 25$ MPa and solidification of freshly molded products by carbonization with carbon dioxide in a carbonization chamber.

Patent RU 2015/2549258 confirmed that among the units for intensive mixture processing before molding of products for activation, the most effective is the plate-roll roller mixer-activator with a fixed plate made in the form of a ring, above which there are conical rolls and rippers articulated to a vertical shaft. Such a cyclically operating unit ensures efficient mixtures processing due to repeated compaction of a thick layer of the mixture by rolling under a roll and subsequent ripping of the compacted layer by rippers. Analogous methods include the use of carbonate filler, both with quick lime and slaked lime and determine the conditions conducive to effective coalescence of grains according to patent RU 2018/2673485. Filler with lime carbonization product - secondary calcium carbonate - due to the similar substance structure.

This is the closest in technical essence and selected as a prototype method for obtaining a prevalently carbonate bound product by carbonization of alkaline materials according to patent RU 2015/2549258. The method includes preparing a raw mixture of a certain grain composition based on lime and a carbonate component, molding products from this mixture at a given molding pressure, a given porosity and permeability, and carbonizing the products in an atmosphere containing $CO_2$ at a certain temperature, humidity, and pressure. The method chosen as a prototype makes it possible to effectively splice filler grains with a lime carbonization product - secondary calcium carbonate, and to obtain products with high quality indicators, first of all - strength.

However, the distinctive features of the effective method for production of small-piece carbonized products from carbonate filler and lime, chosen as a prototype, are aimed at obtaining high quality products, not at ensuring high fume purification efficiency.

SUMMARY OF THE INVENTION

The objective of the present invention is to solve the problem of increasing the efficiency of purification of fume from carbon dioxide by carbonizing small-piece moulded products from lime-containing mixtures (hereinafter referred to as products) while ensuring regulated product quality indicators. The efficiency of this fume purification process can be characterized by three parameters.

The main parameter characterizes the level of quality of fume purification from $CO_2$ - the proportion of $CO_2$ captured from the fume. The decrease in the concentration (mass percentage) of $CO_2$ in the "fume" as a result of its purification can be evaluated using the purification efficiency coefficient Coef = (Coin-Cofi)/Coin = $\Delta$Cofi/Coin, which is determined by the ratio of the difference of $\Delta$Co in the concentration of $CO_2$ in the 'fume' before and after purification ($\Delta$Co = Coin-Cofi) to fume concentration before purification Coin.

The second important parameter of the fume purification process characterizes the amount of $CO_2$ captured by the products from fume, it depends on the characteristics of the fume, the properties of the products and the organization of the purification process. To assess this parameter, you can use such an indicator as the specific average hourly weight increment of the samples $\Delta$Ma $CO_2$, approximately equal to the average weight Ma $CO_2$ [kg] of $CO_2$ captured during carbonization, related to the carbonization duration t, hours, and the average product mass Mp [kg]: $\Delta$Ma $CO_2$ = Ma $CO_2$/(t·Mp) [g/(hour·kg)].

The third parameter characterizes the intensity (rate) of the fume purification process by products. It can be assessed via the indicator of specific performance of fume purification Pu, which is determined by the fume volume V, purified with the coefficient of purification efficiency Coef per unit of time t by unit mass of products - Pu = V/(t·$M_\Sigma$) [$m^3$/(hour·t)], where $M_\Sigma$ is the total mass of carbonized samples involved in the purification of fume from $CO_2$.

It is clear that fume purification should be accompanied by solidification of products to a level that provides the specified indicators of their quality, first of all, strength. To assess the strength of products, the relatively easily determined compressive strength Cs [MPa], is most often used, with which other quality indicators are somehow connected (water absorption, frost resistance, etc.) as a rule. The invention solves the problem of assuring a balance between the maximal possible efficiency of fume purification, determined by the three above indicators (Coef, $\Delta$Ma $CO_2$ and Pu), and a given level of product quality indicators (for example, Cs), the carbonization of which is carried out by fume. The distinctive features of the invention should provide, in comparison with the prototype, higher values of the above four indicators of the quality of the implementation of the proposed method - to increase the integral efficiency of the proposed method for purifying fume from $CO_2$ by carbonizing products.

The invention essence lies in the fact that in a method for purification of fume gases (fume) from carbon dioxide ($CO_2$) by carbonization of small-piece moulded products (products) from mixtures containing lime, which includes the preparation of a molding mixture of carbonate filler and lime, molding products in a mould and purification of the fume compressed to the required pressure and placed in the receiver by absorbing $CO_2$ from the fume during solidification of products in a sealed carbonization chamber (CC). According to the invention, carbonization is carried out in at least two carbonization chambers (CCs) in two stages. At the first stage of intensive purification, a series of working cycles is carried out, each of which includes the supply of a portion of fume with an excess pressure selected from the interval Q1 stg = 03÷0.8 MPa, tempering until reaching the level selected from the range of 40÷80% of the reduction in the concentration of CO2 in the fume, and the ejection of the purified portion of fume into the atmosphere, and the first stage is completed upon reaching the duration of one working cycle selected in advance from the interval of 20÷60 minutes. At the second stage, products are kept in the CC during the maintenance of more than 2x pressure (Q2 stg>2Q1 stg), in comparison with the pressure at the first stage of carbonization, with periodic bypassing of fume into the CC in which the first stage of carbonization is carried out, and the preparation of the molding mixture is carried out by repeated compaction by rolling a thick layer with a roller and ripping it in a high-speed roller mixer-activator of cyclic action, and the products molded hollow with a hollowness of at least 20%.

The main distinguishing features of the method are associated with the use of several CCs and a two-stage carbonization process: the first stage with the predominant passage of the process of capturing $CO_2$ from fume by products at a relatively low-pressure Qc of the fume; and the second stage with the predominant implementation of the process of products solidification at a higher pressure, as well as with periodic by-passing of fume into the CC in which the first stage of carbonization is carried out, and pressure pulsations associated with the bypassing of fume from the high-pressure CC to the low-pressure CC. The listed features make it possible to combine two parallel processes in the best possible way: the process of capturing $CO_2$ by lime from the fume and the following process, that is commensurate in duration - the process of strengthening secondary carbonate and its binding with aggregates, primarily with primary carbonate. Thanks to the proposed two-stage implementation of the carbonization process, the fume undergoes a two-stage purification: preliminary - at the second stage of carbonization, during the products solidification and the final, before fume emission into the atmosphere - at the first stage of carbonization, during the intensive absorption of carbon dioxide by lime.

The main distinguishing features of the method are also associated with the organization of a cyclic process for purification of portions of fume at the first stage of carbonization - the stage of intensive absorption of $CO_2$ from the fume by lime products. Each of the series of working cycles includes supplying a portion of fume with a relatively low pressure to CC filled with products, holding at this pressure until the selected purification quality is achieved, and ejecting the purified portion of fume into the atmosphere. The organization of this cyclic process at the first stage of carbonization, as well as the conditions for the first stage completion and the transition to the second stage, are determined by the following 3 distinguishing features. - A distinctive feature associated with the choice of fume portions with excess pressure at the beginning of each cycle in the first stage of carbonization. Excess pressure is selected from the interval Q1 stg = $03 \div 0.8$ MPa - the breadth of this range is associated with a variety of properties, parameters and characteristics of fume, products, raw materials, and processes that can be used in the implementation of the proposed method for purifying fume from $CO_2$. In case of selecting values less than the specified interval (<0,3 MPa), the positive effect (the level of the above four main indicators of the quality of the implementation of the proposed method) is reduced to a minimal, and in the case of selecting greater values (>0,8 MPa) - the cost of resources for augmenting the positive effect increases unacceptably. The rational pressure level from the specified interval is determined in accordance with the specific characteristics and the selected level of fume purification quality, the characteristics of products with the requirements for their quality indicators and the properties of raw materials for their production, as well as the hardware design and parameters of the processes for preparing the raw mixture for moulding, products moulding and carbonization. In the future, the entire specified selection of factors will be called the factors of the specific implementation of the proposed method for fume gas purification.

- A distinctive feature, that determines the moment of completion of the purification of a portion of fume in each cycle and its release into the atmosphere when the selected level of quality of fume purification is reached - a decrease in the concentration of $CO_2$ in a portion of fume by $40 \div 80\%$. If you choose to reduce the concentration of $CO_2$ in the fume, less than 40%, the implementation of the method, as a rule, becomes inappropriate, in the case of more than 80%, it leads to an unacceptable increase in implementation costs. The rational value of reducing the concentration of $CO_2$ in a portion of fume from the range of $40 \div 80\%$ is determined by the factors listed above for the specific implementation of the proposed fume purification method.
- A distinctive feature, concerning the conditions for the completion of the first stage and the transition to the second stage, is associated with the duration of the working cycle for purification of the next portion of fume. As products are saturated with carbon dioxide, the rate of its absorption decreases, and the duration of the working cycle increases. Therefore, the first stage of carbonization is proposed to be completed upon reaching the maximal (threshold) duration of the working cycle, selected in advance from the interval of $20 \div 60$ minutes. When choosing a threshold duration less than 20 minutes, the rate of purification (and the value of Pu) at the first stage of carbonization increases, but the integral efficiency of purification of the CC as a whole (for both stages) decreases. When choosing a threshold duration greater than 60 minutes, both the rate of purification at the first stage and the integral efficiency of the proposed method for fume purification from $CO_2$ are reduced. The rational value of the duration from the specified interval is also determined taking into account the above-mentioned factors for the specific implementation of the proposed method for fume purification.

The next group of distinctive features is about the organization of the second stage of the proposed fume purification method using two-stage carbonization of products.

A distinctive feature of the method, concerning the use of a higher fume pressure in the CC in the second stage of carbonization is comparison to the first, allows two advantages to be realized. Firstly, an increase in fume pressure will allow continuing the process of considerably intensive absorption of $CO_2$ by those products that have already significantly slowed down the absorption process at low pressure, thereby carrying out effective pre-treatment of fume at the second stage of carbonization and preparation for its final purification at the first stage. Secondly, increased pressure accelerates the solidification of products - it contributes to the formation of more durable secondary calcium carbonate and its stronger bonds with the primary filler carbonate.

A distinctive feature of the method is related also to the choice of pressure for keeping products in the CC at the second stage of carbonization, the value of which is recommended to be taken greater than twice the pressure of the first stage of carbonization (Q2 stg>2Q1 stg). Only due to the difference in pressure the implementation of this feature will allow to move (bypass) pre-purified fume from the CC of the second stage of the carbonization process to the CC operating in the first stage of carbonization through the pipeline, at half the overpressure Q1 stg. Such a bypass, carried out without any external additional stimulation by the blower, will make it possible to supply a portion of already pre-purified fume to the CC operating in the first stage of carbonization at the beginning of each working cycle, which increases the productivity of this CC of the first stage and the method as a whole. The bypass of a portion of fume stops upon reaching the pressure Q1 stg = $0.3 \div 0.8$ MPa, set by the pressure reducing valve in front of each CC. Upon completion of the bypass, the pressure in the CC of the second stage of carbonization increases and is brought to the level preceding the bypass Q2 stg>2Q1 stg. This pulsating pressure mode, from the level Q2 stg to the level (Q2 stg-Q1 stg), has a beneficial effect both on the degree of absorption of $CO_2$ by products and on the process of products solidification, in comparison with the mode of slowly and slightly decreasing pressure, without pulsations.

A distinctive feature of the method, connected with the preparation of the molding mixture by repeated compaction by rolling a thick layer with a roll and its ripping in a high-speed roller mixer-activator of cyclic action, ensures the homogeneity and rational grain composition of the sand, which allows to:

- increase the strength of carbonized products at reduced moulding pressure;
- prevent the appearance of fractures in products during carbonization;
- increase the fume purification efficiency.

A distinctive feature of the method, connected with the molding of hollow products with a hollowness of at least 20%, makes it possible to increase the efficiency of $CO_2$ removal from fume, both by increasing the area of interaction between each product and fume, and by reducing the product thickness. In contrast to traditional methods of solidification of products based on binders (such as cement, lime, gypsum) throughout the entire volume, solidification due to carbonization in the proposed method is carried out by absorbing $CO_2$ from the fume from the surface deep into the product. A decrease in depth leads to both more intense $CO_2$ absorption and an increase in the strength of secondary carbonate and its bonds with aggregates.

Distinctive features of the proposed method make it possible to rationally combine fume purification with the production of saleable products, by taking into account the following main specific principles of the carbonization process:

- the rate of absorption of $CO_2$ by products, falling from maximal to minimal, in each working cycle of purifying a portion of fume - as the content of $CO_2$ in the fume decreases;
- falling from maximal to minimal rate of $CO_2$ absorption by products in each subsequent cycle in comparison with the previous one - as lime carbonization in products;
- the positive effect of increasing fume pressure on the degree and depth of penetration of carbon dioxide, which is part of the fume, from the surface deep into the product;
- the need for a sufficiently long exposure of products in an environment of increased fume pressure, after slowing down to a minimal $CO_2$ absorption rate, to ensure regulated product quality indicators - the need for exposure for solidification;
- dependence of the $CO_2$ absorption rate, integrity and strength of products on the state of the surfaces of filler particles, the degree of homogenization of the composition of the molding mixture and the strength of freshly molded products;
- the positive effect of increasing the surface area of the product and reducing the thickness on the rate and degree of absorption of $CO_2$, as well as on the strength of products;
- increasing the degree of saturation with $CO_2$ and solidification in the case of using pulsating pressure when holding products in the process of solidification.

In total, the distinguishing features of the proposed fume purification method that concern the organization of two-stage carbonization with the fume bypass and pulsating pressure, as well as the method of preparing the molding mixture and the features of carbonized products, allow us to find a solution for increasing the efficiency of fume purification from $CO_2$ at a regulated level of quality indicators of products obtained as a result carbonization.

The implementation of the fume purification method with the proposed distinctive features, with the existing array of factors of a specific implementation, allows you to effectively prepare the molding mixture for molding, mold the most suitable products on the press and carry out the carbonization process in the best possible way with optimal parameters characterizing the fume purification efficiency, while ensuring the required quality indicators products.

In the case of using CC of large sizes and volume, an expedient implementation of fume purification method is to fix the selected boundary concentration of $CO_2$ in the fume by the drop in the partial pressure of $CO_2$ in the hermetic QC - to generate a signal for ejection of the purified portion of fume into the atmosphere. In comparison with the use of the readings of a much more complex $CO_2$ concentration sensor, the use of pressure gauges will not only simplify and reduce the cost of the implementation of the method, but also significantly neutralize the effect of the inevitable unevenness of the $CO_2$ concentration over the volume of the CC.

In the case of using quick lime and slaking the molding mixture in a silo-reactor, an expedient implementation of the method is to process the molding mixture (additional wetting, mixing and activation) in a high-speed roller mixer-activator of cyclic action after the slaking is completed, immediately before molding the products on the press, moreover, the nominal pressure of the roll on a thick layer of the processed molding mixture (pressing force divided by the average radius and the roll width) should be selected from the range of $0.1 \div 0.5$ MPa, and the number of rollings - by rolling with subsequent ripping - from the range of $150 \div 600$ such, to combine maximal fume purification efficiency with regulated product quality indicators. A variety of properties (solidity, grain composition) of those fillers that can be used in the implementation of the method, as well as the properties of lime and carbonization conditions determine the breadth of these ranges. Less solid carbonate fillers require lower values of the indicated intervals. If values smaller than the specified ranges are selected, the positive effect from additional processing is reduced to a minimum, if large values are chosen, the resource costs for incrementing the positive effect increase unacceptably.

In a device for implementing a method for purifying fume from $CO_2$ by carbonizing products from lime-containing mixtures, containing at least two hermetic carbonization chambers (CC) connected by pipelines to a receiver compressed to the required pressure of fume and a pipe for ejecting purified 'fume' into the atmosphere, according to the invention, an additional pipeline is installed connecting all the CC, while each of the CC is connected to the additional pipeline by two conjunctive lines equipped with lockup valves, and one of each pair of conjunctive lines is equipped with an additional pressure reducing valve.

Distinctive features of the device for implementing the method of purifying fume from $CO_2$ by carbonizing products from lime-containing mixtures consist in using an additional pipeline connecting all the CCs with a pair of conjunctive lines to it from each CC equipped with lockup valves, and one line from each pair is also equipped with a pressure reducing valve. These features provide the possibility of bypassing portions of fume previously purified from $CO_2$ from any CC operating in the second stage of carbonization at overpressure Q2 stg, to any CC of the first stage of carbonization, at the beginning of the next working cycle of fume purification, without an additional supercharger, only under the influence of the pressure difference in these CCs. A pressure reducing valve installed on one of each pair of lines allows to stop the supply of a portion of fume upon reaching a selected pressure interval Q1 stg = $03 \div 0.8$ MPa, to which the pressure reducing valves are adjusted before each CC.

Thus, all four main distinguishing features of the device (presence of an additional pipeline connecting all CCs; the connection of each CC with an additional pipeline by a pair of lines, each of which is equipped with a lockup valve; the presence of a pressure reducing valve on one of each pair of lines) make it possible to ensure the implementation of two-stage carbonization. In this case, both stages are conducted simultaneously (in parallel) in at least two CCs, and the bypass of pre-purified fume from one CC to another occurs without additional external stimulation, with the installation of a stable initial pressure of a portion of fume in each cycle of CC-recipients.

ADVANTAGEOUS EFFECTS OF INVENTION

Further benefits and advantages of the present invention will solve the increasingly urgent problem of reducing the content of $CO_2$ in fume gases and entails the use of the process of solidifying small-piece moulded products from lime-containing mixtures by carbonization for fume purification. The implementation of the proposed method will allow combining fume purification with the production of traditional small-piece construction products (bricks, blocks). The implementation will replace the traditional heat-moisture solidification of products by treating them with high-pressure steam in an autoclave, which generates additional $CO_2$ ejections, by solidification via carbonization - saturation of products with $CO_2$. At the same time, a specific distinguishing feature of the method is the use of fume with a different, but relatively low content of $CO_2$ ($10 \div 30\%$), instead of carbon dioxide with a concentration close to 100%.

The method is based on the cyclic supply of fume portions compressed to a predetermined pressure into the carbonization chamber filled with products, the absorption of $CO_2$ due to its selective absorption from the fume by ever deeper penetration deep into the product from the surface, and the emission of fume purified to a selected level of $CO_2$ content into the atmosphere.

In comparison with the patent prototype number SI/EP 2276714 T1 of Republic of Slovenia, the proposed method of fume purification allows to achieve the highest efficiency of purification of fume from $CO_2$ while ensuring the required product quality indicators, in particular - strength, due to the organization of two-stage carbonization with fume bypass and pulsating pressure, the preparation of the molding mixture in the mixer-activator and the high hollowness of the carbonized products. The proposed method makes it possible to take into account the specific factors of its implementation - the properties of fume, the characteristics of raw materials and products with the requirements for their quality indicators, as well as the hardware design and parameters of the processes of preparing the raw mixture for molding, products molding and carbonization. Thus, the problem of providing a balance between the maximal possible volume of fume, purified by a unit of a mass of products to a given $CO_2$ content level, and a given level of quality indicators of products, the carbonization of which is conducted by fume, has been resolved.

In comparison with the prototype, due to the implementation of the proposed method for purification of fume from $CO_2$, a higher and more stable purifying efficiency coefficient Coef is achievable, which is determined by the ratio of the difference in $CO_2$ concentration in the 'fume' before and after purification to the fume concentration before purification, as well as higher rates, both the efficiency of the purification process (specific average hourly gain of mass of the samples $\Delta Ma$ $CO_2$ and the specific performance Pu of fume purification), and the quality of products, in particular, compression strength Cs [MPa].

The economic efficiency of the proposed method of fume purification by two-stage carbonization is associated, firstly, with a reduction in the cost of purification of 1 $m^3$ of fume with a given content of $CO_2$ to a given purification level; secondly, with an increase in the volume of the specified fume, which will be purified to a given level of purification by a unit mass of products.

The proposed fume purification method can be used in two main options. The first option, the most universal one, involves the use of carbonized products compressed to the required pressure and cooled to the required temperature of fume brought by special transport from any, including small, sources of fume, and pumped into the receiver of the initial fume. An example of such sources of fume, cooled and compressed to the required pressure, can be boiler houses located in urban areas or recreational areas. The implementation of this option is simplified when using slaked lime.

The second option that uses quick lime, is most effective when linked to the production of such lime and involves the compression and cooling of off-gases (fume) from the lime kiln before they are fed into the source fume receiver. The absorption of a significant proportion of carbon dioxide, which is released during the production of lime by roasting carbonate rocks, in this option makes it possible to minimize the total harmful emission of carbon dioxide into the atmosphere during the production of small-piece lime-based building products, which is especially important in the context of global warming of the Earth's climate. The efficiency of the implementation of the second method is significantly increased when combined with the production of compressed gases (oxygen, nitrogen, argon, carbon dioxide) from the fume gases of the lime kiln.

The implementation of the proposed method also provides additional benefits. The first advantage is that the fume is purified not only from $CO_2$, but also from sulfur components ($SO_3$), with the formation of $CaSO_4$ in the process of carbonization. This additional advantage is especially important in case of high $SO_3$ content in the fume generated, for example, from coal combustion, including in municipal boilers. In some cases, the environmental positive effect from this additional advantage can be commensurate with the effect of purification of $CO_2$ from fume.

The second additional benefit of the proposed two-stage carbonization is the co-cooling of the carbonization chambers with the cyclic supply of compressed fume into them. The positive effect of this benefit is especially pronounced at the first stage of carbonization, when the exothermic reaction of absorption of $CO_2$ by lime is most active. Eliminating the need for carbonization chamber cooling systems provides its in savings, both at the manufacturing stage and in operation.

Another extra benefit of the proposed fume purification method is the possibility of a significant reduction in moulding pressure when molding products that "purify" the fume during the carbonization process. In comparison with traditional mixing, the preparation of the molding mixture by repeated compaction by rolling a thick layer with a roller and its ripping in a high-speed roller mixer-activator of cyclic action makes it possible to mold products of the required density and strength while reducing the moulding pressure by $20 \div 35\%$, thereby reducing process costs for molding.

In the case of placing the production of small-piece products near the source of fume, it is advisable to use the heat taken from the fume in the process of preparing the fume for use (cooling and compression to the required pressure) for drying products before they are sent to consumers. The importance and specificity of the drying process are associated with the following circumstances:

- Up to 40% of water from the total mass of absorbed $CO_2$ is released inside the product during carbonization, and most of this water must be removed before the products are shipped to the consumer.

- A relatively high temperature of the products is typical for the first stage of the proposed carbonization method, and the temperature drops at a relatively long second stage, so the temperature of the products is not sufficient to dry them without additional heating at the end of carbonization, like, for example, traditional silica bricks and blocks.

Therefore, products drying is organically inherent in the method of their solidification due to carbonization, and the additional advantage of using the heat taken from the fume can generate a significant economic effect.

BRIEF DESCRIPTION OF DRAWGINS

The invention is presented in exemplary implementations in drawings, where individual figures show:

- Fig. 1 - illustrates a general scheme illustrating the implementation of the proposed method in the case of using slaked lime $Ca(OH)_2$;
- Fig. 2 - illustrates a scheme illustrating a device for the implementation of the proposed two-stage carbonization process of products with working cycles of fume purification at a relatively low-pressure at the first stage and a relatively high and pulsating pressure mode at the second stage of carbonization, in the option of fixing the selected boundary $CO_2$ concentration in the fume by falling partial pressure of $CO_2$ in a hermetic CC;
- Fig. 3 - illustrates a general scheme that describes the implementation of the proposed method, in the option of using CaO quicklime, a silo reactor and an activator mixer before products molding;
- Fig. 4 - illustrates a scheme of mixer-activator for the preparation of the molding mixture by repeated compaction of a thick layer by rolling with a roller, followed by ripping.

DETAILED DESCRIPTION OF THE DRAWGINS

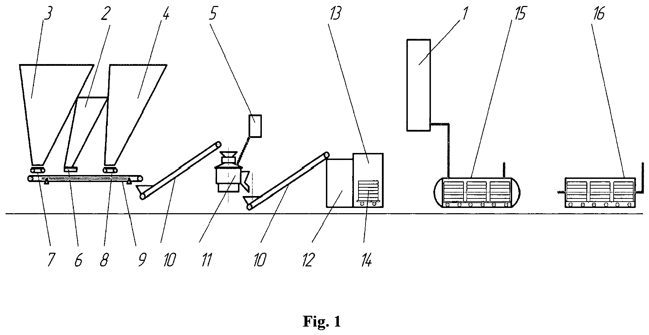

Referring to the drawings and initially to Figs. 1-4, receiver 1 (Fig. 1) serves to pump the fume intended for purification into it, with a selected high-pressure which is greater than the pressure Q2 stg>2Q1 stg of the second carbonization stage, using the initial fume cooling system not shown in the drawing and compressing it with a compressor.

Bins 2, 3 and 4, as well as in the tank and water dispenser 5 are used to load the molding mixture (hereinafter - the mixture) components for the production of small-piece moulded products, by carbonization of which the fume is purified. Slaked lime $Ca(OH)_2$ is loaded into bin 2, fine-grained carbonate filler (for example, limestone crushing sievings) into bin 3, additives that increase the strength of products, if necessary.

The dosing system for portions of the mixture components consists of a lime dispenser 6, feeders 7 and 8 of fine-grained carbonate filler and additives (if necessary), a belt batcher 9 and conveyors 10 for supplying portions of the mixture to a high-speed roller mixer-activator 11 of cyclic action (hereinafter referred to as the mixer-activator) for mixing and preparation for moulding. A press 12 with a receiving bunker of portions of the mixture from the mixer-activator 11, together with the automatic stacker 13, carry out the moulding of small-piece products and stack them on trolleys 14.

Each of at least two carbonization chambers 15 (hereinafter referred to as CC) connected by a pipeline with the receiver 1 serves to accommodate trolleys 14 with products freshly molded on the press 12 and carry out the process of fume purification by carbonizing the products. The drying chamber 16 is used to accommodate trolleys 14 with products after removing them from the CC 15, before sending the products further to the finished product warehouse. The trolley 14 transport system (not shown on the drawing) performs loading of trolleys 14 in CC 15, their reloading into the drying chamber 16 and sending them to the warehouse for packaging.

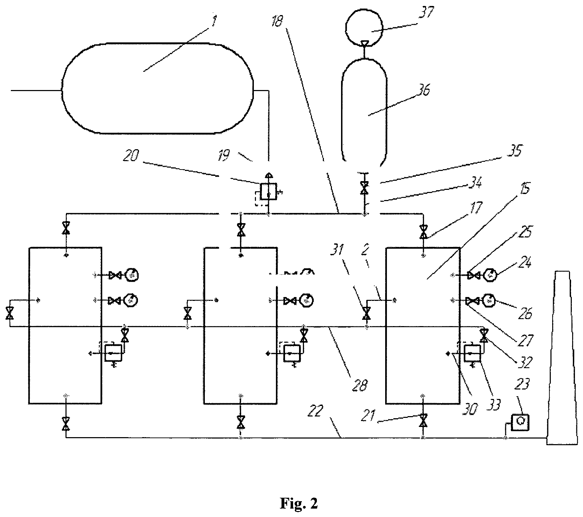

Each CC 15 has an inlet lockup valve 17 (Fig. 2) and is connected by a pipeline 18 with the fume receiver 1. At the outlet of the receiver 1, lockup valve 19 and pressure reducing valves 20 are sequentially installed, allowing to supply portions of fume of a selected relatively high-pressure to each of the CC 15 (Q2 stg >2Q1 stg).

Each CC 15 is equipped with an outlet lockup valve 21 and is connected to a pipe for discharging purified fume into the atmosphere by a pipeline 22 equipped with a system 23 for measuring the mass $CO_2$ concentration in the purified fume. Each CC, in the option of fixing the selected limiting concentration of $CO_2$ in the fume by the drop in the partial pressure of $CO_2$ in the hermetic CC, is equipped with two pressure gauges - high-pressure Mn 24 with a lockup valve 25 and low-pressure Mn 26 with a lockup valve 27. Each of pressure gauges 24 and 26 does measurements only when "its own" lockup valve is open (25 for pressure gauge 24; 27 for pressure gauge 26) and sends a signal to lockup valve 21 to discharge the purified fume through the pipe into the atmosphere.

All CCs 15 are connected to one another by an additional pipeline 28, and each of the CCs is connected with this pipeline 28 by two conjunctive lines 29 and 30. Lines 29 contain a lockup valve 31, and lines 30 - a lockup valve 32 and an additional pressure reducing valve 33.

The pipeline 18 that connects all the CCs by a line 34 with a lockup valve 35 is connected to a receiver of compressed air 36 pumped by a blowing machine 37.

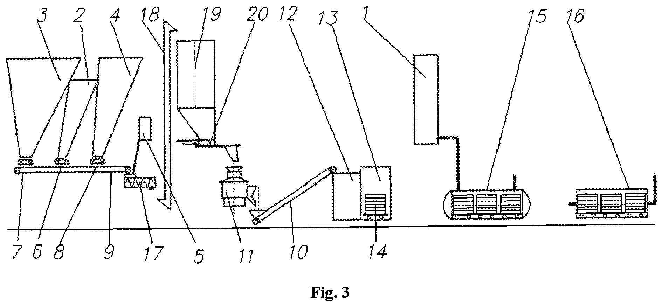

A rational implementation of the method for purification of fume gases from carbon dioxide by carbonizing small-piece moulded products, in the case of using quick lime and slaking the molding mixture in a silo-reactor, is illustrated in Fig. 3.

Bins 2, 3 and 4, as well as the water tank 5 in Fig. 3 are equipped with dispensers of carbonate filler 7, CaO quick lime 6, additives 8, water 5, as well as a conveyor 9 for supplying the mixture components to the mixer 17. After the mixer 17, an elevator 18 is installed and a silo-reactor 19 with a carriage 20 for supplying the mixture for additional moistening and activation into a high-speed roller mixer-activator of cyclic action 11.

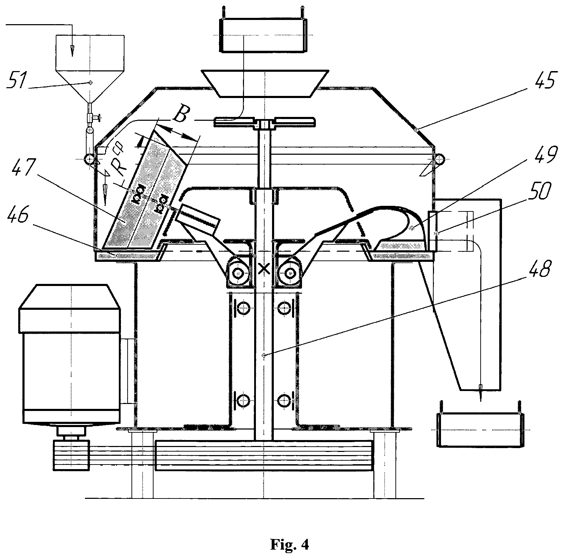

The mixer-activator 11 includes a fixed plate 46, limited by a casing 45 (Fig. 4), made in the form of a horizontal ring. Above the upper working surface of the plate 46, there are cone-shaped roll 47 mounted on bearings ($R^{CP}$ - an average radius of tapered rolls; B - a width of tapered rolls), the axes of which are hingedly connected to the vertical driver shaft 48 by levers. Rippers 49 are also connected to the same shaft, following each roll. In the casing 45, in the area of adjunction to the plate 46, there is a hole with a hinged discharge cover 50, equipped with an opening-closing drive, and a discharge sleeve. A water supply system 51 is attached to the casing 45, including a ring-shaped tube with spray nozzles and a water dispenser with a controlled valve.

The best mode for carrying out the present invention is described in detail below.

The proposed method for purification of fume gases from $CO_2$ by carbonizing products from lime-containing mixtures includes preparing a molding mixture of fine-grained carbonate filler and lime, molding products on a press 12 (Fig. 1) and purifying the fume compressed to the required pressure and placed in the receiver 1 by absorbing CO2 from fume during solidification of products in hermetic CC 15.

The preparation of the molding mixture of fine-grained carbonate filler and slaked lime includes the dosage of a portion of the molding mixture for its loading into a high-speed roller mixer-activator 11 of cyclic action, processing in the mixer- activator 11, unloading from the mixer-activator 11 and transportation to the press bunker 12.

The preparation of the mixture is based on the choice, in accordance with the features of the proposed method of purifying fume from $CO_2$, according to the results of surveillance tests: the composition of the mixture, namely, the use of slaked or quick lime, as well as the necessity of using an additive that strengthens the product; rational mixer-activator 11 operating parameters - the conditional pressure of the roll 47 (Fig. 4) on a thick layer of the processed molding mixture (clamping force divided by the average radius $R^{cp}$ and width B of the roll 47) from the range of $0.1 \div 0.5$ MPa and the number of cycles of compaction by rolling with subsequent ripping - from the range of $150 \div 600$.

In the option of using a slaked mixture, the dosage of a portion of the mixture components (fine-grained carbonate filler, slaked powdered lime, water and, if necessary, additives) in the form of a multi-layer moistened massif is made onto the dispenser tape 9 (Fig. 1). The lower layer of fine-grained carbonate filler is loaded from bunker 3 by feeder 7, the middle layer of slaked lime is loaded from bunker 2 by feeder 6, the top layer (if necessary) of the additive - from bunker 4 by feeder 8. As an additive, a strong and coarse screening of hard limestone or granite with a grain composition, which is characterized by a fineness modulus Fm> 2.5, can be used. The use of an additive is effective in the preparation of a molding mixture based on a fine-grained carbonate filler with low grain strength and (or) a high content of a dusty fraction, especially in the case of high requirements for the strength of products. From above, the multilayer massif on the dispenser belt 9 is moistened with the help of the water dispenser 5 and the conveyor 10 is fed into the mixer-activator 11. At the same time, the content of each component, in any of the fragments along the length of the two- or three-layer massif on the conveyor belt 10, corresponds to the specified content of this component in sand to be used.

From the conveyor belt 10, the components in the form of a multilayer massif land on the fixed plate 46, limited by the casing 45 (Fig. 4), into the area of action of the rolls 47, hingedly connected to the vertical drive shaft 48. The thick layer of the molding mixture components delivered to the plate 46 is compacted by rolling each roll 47, after which the compacted layer is ripped by rippers 49. Additional mixture moistening is conducted by the water supply system 51, which includes an annular tube with spraying nozzles and a water dispenser with a controlled valve.

Mutual intense friction of the particles of the molding mixture in the process of Multiple compaction by rolling a thick layer with rollers 47 and subsequent ripping of the compacted layer with rippers 49 make it possible to prepare a homogeneous mixture for molding - with such a grain composition and condition of the filler surfaces, which provides the most effective fume purification from CO2 and the best products quality indicators, and also prevents the appearance of defects (cracks) in products during carbonization. The selection of a rational level of conditional pressure of the roll 47 on the mixture layer (equal to the pressing force divided by the average radius $R^{cp}$ and the width B of the roll 47), from the range of $0.1 \div 0.5$ MPa, is conducted by adjustment of the centrifugal force affecting the roll 47 by changing the rotational speed of vertical drive shaft 48 or mass of roll 47. Processing (activation), combined with mixing, is completed by a signal from the time relay P1 (not shown on the drawing) which fixes the completion of the optimal number of compactions for the planned use of the molding mixture by rolling followed by ripping, selected from the range of $150 \div 600$.

The unloading of mixture prepared for molding from the mixer-activator is conducted by opening the hinged discharge cover 50, equipped with an opening-closing drive, and the mixture is sent to the feed conveyor to the mould bunker 12 (Fig. 1) by the discharge nozzle.

In the implementation of the method for purification of fume gases from $CO_2$ by carbonizing products using quick lime CaO and slaking the molding mixture in the silo-reactor 43 (Fig. 3), the system for preparing the moulding mixture operates as follows.

Fine grained carbonate filler from bunker 3, as well as quick lime from bunker 2 and an additive from bunker 4, together with water, are dosed into mixer 41 by dispensers 38, 6, 39 and 5. After mixing by elevator 42, the mixture is loaded into silo-reactor 43 with carriage 44 for supplying the mixture for additional moistening and activation in a high-speed roller mixer-activator of cyclic action 11. In the option of using quick lime, the installation of the mixer-activator 11 right after the silo-reactor 43, immediately before the mixture is fed for the molding, makes it possible to obtain the above-mentioned positive effect from preparing the mixture for molding by repeated compaction by rolling a thick layer of the mixture with a roller and its subsequent ripping. The maximum positive effect will be obtained provided that the levels of conditional pressure of the roll on a thick layer of the processed molding mixture and the number of compactions by rolling with subsequent ripping from the above recommended ranges are used. The breadth of the recommended ranges is associated with a variety of properties (solidity, grain composition, etc.) of fillers and lime planned to be used to implement the proposed fume purification method, as well as the properties and characteristics of products, fume and carbonization conditions. The conditional pressure of the roll on the layer of the mixture and the number of compactions-rippings of the layer should be selected from the indicated ranges so as to ensure the maximal efficiency of fume purification while ensuring the regulated product quality indicators.

From prepared in the mixer-activator 11 (Fig. 1) and portions of the mixture on the press 12 loaded into the bunker of the press 12 small-piece hollow products are molded with a hollowness of at least 20%, which improves the efficiency of fume purification from $CO_2$ by increasing the area of interaction of each product with fume and reduce the thickness of the product, as well as increase the strength of secondary carbonate and its bonds with fillers.

The hollow products molded on the press 12 are stacked by the automatic stacker 13 on the trolleys 14, which are loaded into the carbonization chamber (CC) 15 by a transport system (not shown in the drawing).

Before starting the carbonization system, taking into account the above-mentioned entire array of factors for the specific implementation of the proposed method of fume purification from $CO_2$, it is necessary to select:

- Capacity of CC 15 (divisible by the hourly operating press 12 capacity) and the number of CC.
- Relatively low excess pressure of the fume portion at the beginning of each cycle in the first stage of carbonization from the interval Q1 stg = 0.3÷0.8 MPa.
- Relatively high-pressure of the fume portion at the beginning of each cycle in the second stage of carbonization from the condition Q2 stg>2Q1 stg.
- Level of fume purification - reducing the concentration of $CO_2$ in a portion of fume from the range of 40÷80%.
- Corresponding levels of $CO_2$ partial pressure drop at Q1 stg and Q2 stg, as well as the levels of minimal overpressures for the beginning of ejection of purified fume into the atmosphere at each stage of carbonization are Q1 stg Min-Q2 stg Min. These levels are determined in the option of using pressure gauges for recording the moment when the discharge of purified fume begins. The determination of these levels is conducted in the process of setting up the proposed device for implementing the method, based on the readings of the sensor of the system 23 for measuring the mass concentration of $CO_2$ in the purified fume, which is equipped with the pipeline 22.
- The maximal (threshold) duration Tp = 20÷60 minutes of the working cycle of the first stage, after which the first stage ends and the second begins - the initial pressure of the next portion of the fume rises from Q1 stg to Q2 stg.

The initial position of the elements of the carbonization system (Fig. 2) is characterized by the following:

- Lockup valves 19 for supplying fume from the receiver 1 and 35 for supplying compressed air from the receiver 36 to the pipeline 18, as well as lockup valves 17, 21, 25, 27, 31, 32, 35 of each CC - are closed;
- The pressure reducing valve 20 for supplying fume from the receiver 1 to any of the CCs 15 is set to a relatively high-pressure Q2 stg>2Q1 stg of the second carbonization stage.
- The pressure reducing valves 33 of each CC 15 are set to feeding into it, at the first stage of carbonization, portions of fume of relatively low-pressure Q1 stg from any other CC 15 operating at a relatively high-pressure equal to or slightly less than Q2 stg.
- The pressure gauge Mn 24 of each CC 15 is set in such a way that when the pressure Q2 stg Min is reached, it sends a signal to the lockup valve 21 of this CC for opening.
- The pressure gauge Mn 26 of each CC 15 is configured in such a way that when the pressure Q1 stg Min is reached, the signal for opening is sent by it to the same lockup valve 21 of this CC. The minimal (threshold) pressures Q1 stg Min and Q2 stg Min of the beginning of the ejection of a portion of fume from the CC are determined in such a way as to provide a purifying efficiency coefficient Coef selected from the range of 40÷80%. When determining these pressures, the mass concentrations of $CO_2$ of the initial Coin and purified Cofi fume are basic in determination of the indicated pressures. The latter concentration is determined by averaging the measurement results obtained in the process of setting up the device, using the system 23 for measuring the mass concentration of $CO_2$ in the purified fume, which is equipped with pipeline 22.
- The time relays are configured accordingly, that is, they are set for: P2 - the duration of filling the CC with fume from the receiver to a relatively high-pressure Q2 stg when opening the lockup valve 17; P3 - the duration of filling the CC with fume from atmospheric pressure to relatively low-pressure Q1 stg when opening the lockup valves 31 and 32 of the pair of CC for bypassing the pre-purified fume from one CC to another; P4 is the duration of fume ejection from the CC into the atmosphere through the pipe; P5 - selected maximal duration of the working cycle of the first stage of carbonization [Tc]; P6 - the selected total duration of both stages of the carbonization process Ttc.
- After the first CC 15 next CC (hereinafter referred to as CCn) is fully loaded with trolleys 14 (Fig. 1) with freshly molded products, it is hermetically closed and the CC system 15 is launched by opening the lockup valve 19 (Fig. 2) of the receiver 1 and the lockup valve 17 of the CCn ready for launch of carbonization. In this case, the time relay P6 starts counting the total duration of the carbonization process required to complete the carbonization in the CCn after reaching Ttc.

The CCn is filled with the first portion of fume to the selected relatively high-pressure Q2 stg>2Q1 stg - by the corresponding setting of the pressure reducing valve 20. Then automatically, by a signal from the time relay P2, after filling the CCn with fume, the lockup valve = 17 closes, and the lockup valve 25 in front of the pressure gauge Mn 24 opens, and the process of carbonization begins - intensive absorption of $CO_2$ from a portion of fume by products, accompanied by a pressure drop in the CCn.

Thus, when the CC system is put into operation, the carbonization process in the first CCn loaded with products, begins at a relatively high-pressure Q2 stg in contrast to the steady-state operation. The pressure gauge Mn 24 detects the decreasing pressure, and after its drop to the level Q2 stg Min, it generates a signal for opening the lockup valve 21 of the CCn and closure of the lockup valve 25 in front of the pressure gauge Mn 24. A portion of fume with a $CO_2$ concentration reduced by a value selected from the range 40÷80%, is ejected into the atmosphere by a pipe through pipeline 22, equipped with a system 23 of measurement of the mass concentration of $CO_2$ in the purified fume. After the pressure in the CCn is reduced to atmospheric pressure, the lockup valve 21 at the outlet of the CCn closes by a signal from the time relay P4, the lockup valve 17 opens, the next portion of fume of the selected relatively high-pressure Q2 stg is supplied to the CCn, and the next carbonization cycle is conducted in the process of the first CCn launch. Further, the described cycles in CCn are repeated.

At this time, the next CC15 (hereinafter - CCnext) is filled with trolleys with freshly molded products. After full loading and closure of CCnext, the first stage of carbonization with low-pressure Q1 stg begins in it. For this, the following is sequentially performed on a signal for closing the CCnext:

- the lockup valve 25 closes in front of the pressure gauge Mn 24 of CCn;
- the lockup valve 31 opens to bypass the pre-purified fume from the first CCn to the additional pipeline 28;
- the lockup valve 32 of CCnext is opened for receiving fume from the first CCn;
- time relay P6 starts counting the total duration of both stages of the carbonization process in CCnext, necessary to complete the second stage of carbonization in this CCnext after reaching Ttc.

Further, the CCnext is filled with the first portion of fume from the first CCn to the selected relatively low-pressure Q1 stg by the corresponding setting of the pressure reducing valve 33. After a signal from the time relay P3, when the CCnext is filled with fume of relatively low-pressure, the shutoff valves 31 and 32 close, the shutoff valve 27 opens, the pressure gauge Mn 26 is turned on, and in the first stage of carbonization begins in CCnext - the absorption of $CO_2$ from a portion of fume by products, accompanied by a decrease in pressure from Q1 stg to Q1 stg Min. From this moment, during a signal from P3, the time relay P5 starts counting the duration of the working cycle Tc of the first stage of carbonization for subsequent comparison with the value [Tc] set.

At the same time, during the signal P3 (closure of the lockup valve 31), the lockup valve 17 opens in the first CCn, the pressure in this CC increases from Q1 stg Min to Q1 stg by the initial fume coming from the receiver 1, during the signal from the time relay P2, the lockup valve 17 closes and the second stage of solidification continues in the pressure pulsation mode in the first CCn.

At this time, in CCnext, the pressure gauge Mn 26 detects a decreasing pressure, and after its drop to the level Q2 stg Min it generates a signal to open the lockup valve 21 of CCnext, as well as to fix the time relay P5 of the duration of the main part of the working cycle - the duration Tc of the pressure drop mode in the CC from Q1 stg to Q1 stg Min. The duration Tc fixed by P5 is compared with the specified [Tc], and the Tc value is reset to zero. The fume from CCnext, purified to the same selected purification level as from the first CCn - with a reduced concentration of $CO_2$ in a portion by the same amount selected from the range of 40÷80% - is released into the atmosphere. After reducing the pressure in the CC to atmospheric pressure, the lockup valve 21 is closed at the outlet of the CCnext by a signal from the time relay P4.

If Tc<[Tc], then the signal from P5 is not generated, and a new working cycle of the first stage of carbonization begins in CCnext. Same as in the previous CCnext operating cycle, the check valves 31 and 32 are opened to bypass the pre-purified fume from the first CCn to the CCnext. CCnext is filled with the second portion of fume from the first CCn up to a pressure Q1 stg.

Further, the above-described working cycle of the first stage of carbonization in CCnext is repeated until the duration Tc exceeds the maximal (threshold) duration Tc>[Tc] selected from the interval Tp = 20-60 minutes. After that, at a signal from P5, the first stage in CCnext ends, and the second one begins, with a higher pressure Q2 stg>2Q 1 stg.

After the completion of the first stage in CCnext, after the last ejection of a portion of the fume purified at the first stage into the atmosphere, the lockup valve 21 at the outlet of the CCnext and the valve 27 of the pressure gauge Mn 26 are closed at a signal of P4. By opening the lockup valve 17 of CCnext, CCnext is being filled with the first portion of fume at a relatively high-pressure Q2 stg. At a signal from the time relay P2, after completion of filling, the lockup valve 17 is closed, and the lockup valve 25 is opened in front of the pressure gauge Mn 24, and the second stage of the carbonization process begins. At the beginning of the second stage, depending on the factors of the specific implementation of the method of purifying fume from $CO_2$, along with solidification, a rather intensive absorption of $CO_2$ from a portion of fume can occur, accompanied by a pressure drop in the CC to a level Q2 stg Min. Then the cleaned portion of fume is discharged into the atmosphere. If the pressure drop does not reach the specified level, then high-pressure carbonization takes place until the next CC is loaded with trolleys with products, and the pre-purified fume is passed from this CC to the next one for conduction of the first stage of carbonization in it. Most often, the duration of the second carbonization stage exceeds the duration of the first stage, so the second carbonization stage is divided into three parts: the first - short on - intensive absorption of $CO_2$, with a decrease in pressure from Q2 stg to Q2 stg Min and the release of purified fume into the atmosphere (reducing pressure to atmospheric pressure QA) - before the start of the bypass to the next CC; the second stage, the longer one, with a pressure pulsation from Q2 stg to (Q2 stg-Q1 stg) - with the indicated bypass of fume to the next CC for the first stage of carbonization; the third, without ejection and bypass, with a decrease in pressure from Q2 stg to a higher level Q2 stg Min - solidification with delayed residual absorption of $CO_2$

After the completion of the first stage in CCnext, the second stage of carbonization continues in the first CCn, but already without pressure pulsation, which, as a rule, becomes ineffective at the final stage of the second stage. At a signal from the time relay P6 that indicates about the achievement of the planned total duration of the process in this CCn, as in any of the subsequent CCs that are being prepared for unloading, the lockup valve 19 of the receiver 1 is closed:

- Bypassing the last portion of pre-purified fume from the CC which is prepared for unloading to the CC in which the first stage of carbonization is conducted.
- Ejection of the rest of the portion into the atmosphere from the CC which is being prepared for unloading.
- Blowing out the CC which is being prepared for unloading with compressed air, for purifying it from fume residues.
- Preparation of CC for unloading.

The bypass is conducted in this way:

- The lockup valve 17 of the first CCn (or any other CC being prepared for unloading) is opened for intake of excess high-pressure of the initial fume from the pipeline 18 and further reduction of the pressure in the pipeline 18 during bypass.
- The lockup valve 31 of the first CCn (or any other CC being prepared for unloading) is opened to bypass about half of the fume into the additional pipeline 28 for supplying fume to any other CC, in which the first stage of carbonization is conducted.
- At the beginning of the next working cycle, the lockup valve 32 is opened in any other CC, where the first stage of carbonization is conducted, for bypassing about half of the fume into it from the CC, which is being prepared for unloading, for example, from CCn.
- After this CC is filled with fume, in which the first stage of carbonization is carried out, the lockup valves 31 and 32 of both chambers are closed at a signal from the time relay P3, and the lockup valve 27 of the activation of the pressure gauge Mn 26 of the CC is opened, in which the first stage of carbonization is carried out.

At that, the fume bypass ends, and after closing the lockup valve 31 of the CC which is prepared for unloading, the lockup valve 21 is opened at the outlet of the same CC. As a result, only one portion of insufficiently purified fume with a low-pressure, which is approximately equal to Q1 stg, is released into the atmosphere.

The blowdown of the CC, which is prepared for unloading, with compressed air from the receiver 36 is conducted after the lockup valve 35 is opened at a signal from P4. It is completed at a signal from P2 - the lockup valves 17 of the CC, which is prepared for unloading, and 35 of the receiver with compressed air 36 are closed, and the lockup valve 19 of the receiver 1 is opened.

After completing the above-mentioned procedures, the CC which is ready for unloading is opened, the trolleys with firm but wet products are reloaded into the drying chamber before being sent to the finished product warehouse.

EXAMPLE

The present invention is described in more detail and specifically with reference to the below example, which however is not intended to limit the present invention.

The proposed method has been implemented by sequential performance of three interdependent operations - preparing a molding mixture, molding small-piece products on a press, and solidification in a carbonization chamber filled with fume to saturate the products with $CO_2$.

The operation of preparing the molding mixture included the selection and dosage of the components, their mixing and preparation for molding.

The main component of the mixture was a fine-grained carbonate filler in the form of limestone screenings (Ls), with a maximal particle size of 2.5 mm in series with the molding of products without using a mixer-activator in the preparation of the mixture, and 5.0 mm in the remaining series. In order to improve the level of quality indicators of products obtained as a result of the proposed method, in particular, their strength, an additive was introduced into the mixture - particles of strong screenings with a fineness modulus Fm>3.

Lime was used in two versions: hydrated powdered lime (slaked lime) with an activity of $50 \div 60\%$ and a content of $12 \div 16\%$; quick-acting powdered activity of $70 \div 90\%$ (slaking rate - 80°C for $3 \div 5$ minutes) with a content of $8 \div 12\%$. The moisture content of the mixture based on slaked lime was $7 \div 10\%$, quick lime - $3 \div 4\%$ more (in activated mixtures, as a rule, the humidity was ≈1% higher than in mixtures with traditional mixing).

Mixing and preparation for molding was carried out in two options: In the case of using slaked lime (Fig. 1), mixing a portion of moistened components, combined with additional processing (activation), by repeated compaction by rolling a thick layer with a roller and its ripping, was conducted in the proposed device with the following main parameters: width B = 50 mm of a fixed plate 46 (Fig. 4), made in the form of a horizontal ring with a radius of the inner circumference of the plate R = 145 mm; with two tapered rolls 47 mounted on bearings with an average radius $R^{cp}$ = 72 mm and width B = 30 mm; nominal angular rotation of the vertical drive shaft 48, rotated by the engine through the transmission, $\omega$ = 30 $s^{-1}$, with the possibility of adjustment $\omega$ by a frequency converter; conditional pressure of the roll on the layer of the processed mixture (pressing force divided by the radius $R^{cp}$ and the width B of the roll), which is adjustable by changing $\omega$ and, accordingly, the centrifugal force and the force of pressing the roll to the layer, in the range of 0.1÷0.3 MPa; the number of cycles of compaction-ripping of the mixture layer in the range of 150÷600, set by the duration of mixing and activation; mass of the portion of the mixture loaded into the device, mc = 2.5÷3 kg. In the case of using quick lime (Fig. 3), the results obtained during mixing before and after slaking were compared, both with traditional mixing and with the above-described portion mixing, combined with additional processing (activation), by repeated compaction by rolling a thick layer with a roller and its ripping

The molding of samples of small-piece products from the molding mixture prepared in the above-described options was conducted using the method of semi-dry pressing in closed moulds on a hydraulic press at a moulding pressure of 20÷30 MPa. Three variants of products were molded: cubes with an edge of 50 mm - full-bodied K and hollow Kp with a hollowness above 30%; samples M with a plan size of 50 × 50 mm and a height of 25±2 mm.

The solidification of freshly formed samples of small-piece products was conducted by saturating the products with carbon dioxide in one of the two carbonization chambers CC, filled with conditional 'fume' - a mixture of gas carbon dioxide $CO_2$ and nitrogen $N_2$ according to technical specifications 2114-002-45905715-04 from a tank, with a volume ratio of $CO_2$ - 15÷20% and pressure regulated by a pressure reducing valve in the range 0.2÷1.6 MPa. In a large CC (CCl) with a diameter of 200 mm and a length of 250 mm from 7 to 14 samples P or from 16 to 32 samples M were placed. In a small CC (CCs) with a diameter of 80 mm and a length of 125 mm 2 samples K (Kp) or 4 samples M were placed. The corresponding equipment made it possible to: fix the pressure in the CC with the required accuracy using interchangeable pressure gauges with different measurement scales; fill or supplement the CC with the (initial) fume intended for purification up to the selected pressure; carry out the ejection of purified fume from the CC with a decrease in the concentration of $CO_2$ to a selected level, focusing on the corresponding decrease in partial pressure - thus representing the operating cycle of both the first and second stages of carbonization; releasing pressure to the selected level; controlling the levels of $CO_2$ concentration in the fume of the initial Coin and discharged Cofi to after complete purification, or Coful after primary purification; measuring the mass of samples with the required accuracy before loading into the CC and after unloading - upon completion of the carbonization stages.

The level of $CO_2$ concentration in the fume was monitored by the GC-0016 ExplorIR-W sensor, which uses the patented solid-state NDIR optical LED technology. The CM-0121 kit with this sensor was supplemented with a special device for feeding the sensor with fume from a rubber ball filled with fume taken from the CC at different stages of carbonization. The CM-0121 kit has been modified by installing a hose with a container on the TC-1 cover adapter (the $CO_2$ meter tube cap adapter coverts the spectrum gas sensos from diffusion application to sampling for catching possible condensate). There is a plastic nickel at the end of the hose, to which a rubber balloon, filled with fume, in which the concentration of $CO_2$ was determined, was fastened. GasLab software is used for carbon dioxide measurement and display, sensor setup and data logging. Concentration measurements made it possible to choose such a level of pressure drop, both at the first and at the second stage of carbonization, which provided the required level of partial pressure of $CO_2$ and the chosen degree of fume purification Coef from $CO_2$ accordingly.

Evaluation of the effectiveness of the method of purification of fume gases from carbon dioxide by carbonization of small-piece moulded products from mixtures containing lime and devices for its implementation was conducted using the following criteria. The main criterion was the purification efficiency coefficient Coef, which characterizes the level of quality of fume purification from $CO_2$ - the proportion of $CO_2$ captured from the fume. Coef = ΔCofi/Coin was determined by the ratio of the difference of ΔKm of the concentration of $CO_2$ in the 'fume' before and after purification (ΔCofi = Coin-Cofi) to the concentration of fume before purification Coin.

This criterion in each of the series of measurements was maintained at the selected level, which was achievable throughout the first stage of carbonization with the studied set of factors for the specific implementation of the proposed fume gas purification method. The level of this criterion was set by the level of the pressure drop in the CC in each working cycle of the first stage of carbonization - the level of the drop in the partial pressure of $CO_2$ and was controlled by the $CO_2$ concentration sensor in the purified fume ejected into the atmosphere.

The second criterion - the specific performance of fume purification Pu - characterizes the intensity (rate) of the purification process per unit mass of products: Pu = V/(t·$M_\Sigma$) [$m^3$/(hour·t)], where V is the volume of fume purified with the purification efficiency coefficient Coef per unit of time t; $M_\Sigma$ - the total mass of products involved in the purification of fume from $CO_2$.

The third criterion characterizes the amount of $CO_2$ captured by products from fume - the specific average hourly increase in the mass of samples ΔMa $CO_2$, approximately equal to the average mass Ma $CO_2$ of $CO_2$ captured in the carbonization process, related to the carbonization duration t, hours, and the average mass of the product Mp [kg]: ΔMa $CO_2$ = Ma $CO_2$/(t·Mp) [g/(h·kg)] - without taking into account the mass of moisture evaporated during the process K and condensed on the walls and cover of the CC. The actual value of $\Delta m_{y\phi\ CO_2}$ can be up to 10% higher, as shown by special measurements for assessment of the specified moisture content.

The fourth criterion assessed the level of quality indicators of products as a result of solidification, which accompanies the process of purifying fume from $CO_2$. Strength in compression, which is determined immediately after the completion of solidification - after removing the moistened products from the CC, is taken as an integral quality indicator. This "lower" strength is approximately equal to the strength after drying the products and saturating them with water. The strength was determined by crushing products of different sizes and converted into strength in MPa of samples regulated by the standard, with the same solidification time.

In addition to these main criteria, additional ones were used: the presence of defects that appeared as a result of solidification accompanying fume purification; dry strength, which is taken into account when referring products to a classification group by strength and determining the samples softening coefficient - the ratio of strength in compression in a state when saturated with water and dry state; assessment of the content of residual lime that has not reacted with carbon dioxide using phenolphthalein; the rate of decrease in $CO_2$ absorption and increase in the strength of samples, etc.

The results obtained in a series of measurements to determine the levels of the above-mentioned criteria for evaluating the effectiveness of various options for implementing the method of fume purification by carbonization of lime-based products were compared. In Table 1, which is given below, the consolidated results of the implementation of the method for purifying fume gases from carbon dioxide by carbonizing small-piece moulded products from mixtures containing lime using a device for its implementation are presented as examples. Table 2 shows data on the level of factors of those series of measurements, the results of which are included in Table 1 and performed to compare the results of the options for implementing the proposed method and device for its implementation.

Table 1. Examples of generalized results of the implementation of the method for purifying fume gases from $CO_2$ by carbonization of small-piece moulded products from mixtures containing lime using the proposed device

| Differences in the implementations of the proposed method (characteristics of other factors are given in Table 2) | Purification efficiency coefficient Coef | Specific performance Pu= V/(t$_\Sigma$· $\Sigma$ Mp) [l/ (min·kg)] | Specific average hourly weight gain of samples $\triangle$Ma CO2 [g/(h· kg)] | Specimens' compression strength, Cs r, (Reduced to t$_\Sigma$ = 8 h) [MPa] |
|---|---|---|---|---|
| **Series 1. Various pressures and carbonization conditions, active quick lime** | | | | |
| With low initial pressure (Qc 1 =3 atm) for C Single stage C, no pressure pulsation | 0.65 | 0.28 | 3.5 | 22 |
| With a high initial pressure (Qc h = atm) during C One stage C, no pressure pulsation | | 0.23 | 3.4 | 19 |
| With the recommended two-stage mode (P.P.) - low initial pressure during the 1st stage C1 (Q1 stg = 3 atm) and high (Q2 stg = 7 atm) during the 2nd stage C2 and pulsation Q2 stg | | 0.35 | 4.5 | 28 |
| **Series 2. Various pressures and conditions of carbonization, slaked lime with low activity** | | | | |
| With a low initial pressure (Qc 1 = 3 atm) during C One stage C, no pressure pulsation | 0.2 | 0.54 | 4.2 | 39 |
| With the recommended two-stage mode (P.P.) - low initial pressure during the 1$^{st}$ stage C1 (Q1 stg = 3 atm) and high (Q2 stg = 6 atm) during the 2nd stage C2 and pulsation Q2 stg | 0.25 | 0.29 | 3.4 | 31 |
| **Series X1. Comparison of indicators of products from activated (A) and non-activated (base B) mixtures** | | | | |
| Products of the base (B) mixture | 0.65 | 0.39 | 5.1 | 22 Cracks developed |
| Products of the activated (A) mixture | | 0.36 | 4.6 | 26.0 |

(continued)

| Series X2. Comparison of carbonization indicators Csol (solid) and Chol (hollow) products | | | | |
|---|---|---|---|---|
| Solid products - cubes 50 × 50 × 50 mm | 0.85 | 0.14 | 2.2 | 8.5 |
| Hollow products - cubes of the same size with a hollowness of 35% | | 0.27 | 4.8 | 11 |

Table 2. Set of factors of a series of measurements performed to compare the results of options for implementing the method for purifying fume gases from $CO_2$ by carbonization of small-piece moulded products from lime-containing mixtures, using the proposed device for its implementation

| Parameters | Series 1 | Series 2 | Series X1 | Series X2 |
|---|---|---|---|---|
| **Molding mixture preparation** | | | | |
| Mixture components | Ql/10 | Hl/16 | Ql /10 | Hl/10 |
| - additive (type/content in [%]) | Gs/25 | Gs/25 | Gs/25 | Gs/25 |
| Hydration duration [min.] | 30 | 30 | 30 | 30 |

| Mixing and activation options | | | | |
|---|---|---|---|---|
| - nominal pressure of the roll [MPa] <br> - number of compaction-ripping cycles | 0.35 <br> 150 | 0.35 <br> 150 | 0.35/w/o A <br> 150/w/o A | 0.35 <br> 150 |
| Molding parameters | | | | |
| - designation of samples <br> - hollowness [%] <br> - backfill weight [g] <br> - pressing pressure [MPa] | Chalf <br> 0 <br> 136 <br> 25 | Chalf <br> 0 <br> 136 <br> 25 | Chalf <br> 0 <br> 136 <br> 30/25 | Csol / Chol <br> 0/35 <br> 272/170 <br> 30 |
| Carbonization parameters (C) | | | | |
| $CO_2$ content in 'fume' [%] volume/mass [%] | 20/28 | 20/28 | 20/28 | 14/20 |
| CC type/filling coefficient | CCl/0.15 | CCl/0.15 | CCl/0.15 | CCs/0.4 |
| Number of samples | 16 | 14 | 16 | 2 |
| K mode - one / two stage | Comparison of different carbonization modes | Comparison of two carbonization modes | 2-X | 2-X |
| Pressure [MPa] <br> 1st stage <br> 2nd stage | | | 3 <br> 7 | 5 <br> 10 |
| Duration, hour <br> 1st stage <br> 2nd stage <br> total | | | 2.9 <br> 2.6 <br> 5.5 | 3.4 <br> 1.6 <br> 5.0 |
| The presence of pressure pulsations at the 2nd stage | | | + | + |

Detailed information to the data from the tables:

Dimensions of products:

- designation Chalf (small): 50 × 50 × 25±1.5 mm;
- designation Csol (solid cubes): 50 × 50 × 50±1.5 mm;
- designation Chol (hollow cubes): 50 × 50 × 50±1.5 mm.

Information about the components of the molding mixture: the main component is limestone screening Ls, grain composition 0÷2.5 mm Mf = 1.8 (fine) and 0-5.0 mm, with Mf = 2.2 (middle);
Lime used in the series whose results are shown in Table 1:

Q1 - quick, highly active (activity A = 90%, slacking rate: 60°C for 2 min. 40 s; 80°C for 4 min. 50 s);
HI - hydrated (slaked) lime low active (activity 50%, slaking rate: 30°C in 2 min.);

Gs additive - used in the series, the results of which are shown in Table 1: granite screenings of grain composition 0.63-5 mm with modulus of fineness Fm = 3.7, crushability grade 1000.

A series of measurements are devoted to a comparative assessment of the know method and proposed two-stage method of fume purification using carbonization. In all these series of measurements, the process of purifying portions of fume was organized using working cycles - it included supplying portions of fume to CC filled with products, with a selected overpressure, holding at this pressure until the selected quality of purification was achieved, and ejecting the cleaned portion of fume into the atmosphere. The ejection began when the pressure gauge screenings signalled a drop in the partial pressure of $CO_2$ in the CC to the selected level.

The minimal (threshold) pressure Q1 stg Min of the beginning of the ejection of a portion of fume from the CC in the working cycle of both the first and second stages of carbonization of the series was determined in such a way as to provide a purifying efficiency coefficient Coef selected in advance from the interval of 40÷80%, which characterizes the level of concentration reduction $CO_2$ in fume. To do this, in each series, during the preliminary experiment, mass concentrations of fume were determined by measurements using a sensor before and after purification - the initial Coin and the final Cofi. The latter was determined throughout the entire stage of fume purification, and such a value that could be achieved in 20÷30 minutes was chosen for further use.

Next, the value of Coef = 1-Cofi/Coin was calculated, and the mass concentrations (mass fractions) of fume before and after purification - initial Coin and final Cofi, - were converted into volume fractions: Coi = Coin·R $CO_2$/Rm i; Cof = Cofi· R $CO_2$/Rm f. The conversion was carried out using the ratio of the $CO_2$ gas constant (R $CO_2$ = 189 J/kg) and the current gas mixture constant: initial, before purification Rcm h = 8314/$\mu$mi, and final 8314/$\mu$mf. The current molar masses of fume $\mu$mi and $\mu$mf were found taking into account the molar masses of the fume ingredients and the current proportions of these ingredients in the fume. The conversion of mass to volume fractions was also carried out in a simplified way, using the coefficient Cmr = R $CO_2$/Rm i ≈ 0.7 (the error did not exceed ±5%). Further, at the selected carbonization pressure $Q_s$ = Q1 stg, MPa, the difference between the initial (Qi $CO_2$ = Qs·Coi) and final (Qf $CO_2$ = Qs·Cof) partial pressures of $CO_2$ δif= Qs (Coi-Cof), as well as the required boundary pressure Q1 stg Min = Q1 stg

$-K_\Sigma \cdot \delta if$ - correction coefficient $K_\Sigma = (0.9 \div 1.1)$ takes into account the inevitable differences between the actual set of factors of a series of measurements from the calculated ones, including the presence of the residues of the previous portion of the purified fume in the CC, before the next portion of the initial fume is supplied. When selecting K∑, it should be borne in mind that an overestimation of Q1 stg Min reduces the integral value of Coef, an underestimation reduces the specific performance of fume purification Pu.

The selection of a duration of the carbonization process is, first of all, sufficient to achieve the regulated strength of the selected type of small-piece products, secondly, it was limited by the length of the working day in most series.

In each of the series, the influence of one or more of the proposed distinctive features was tested. In several series, the effectiveness of a two-stage carbonization process was evaluated using slaked and quick lime with different coefficients of filling of the CC and different levels of fume purification.

At that, at the first stage:

- excess pressure was selected from the interval Q1 stg= 03÷0.8 MPa;
- the moment of completion of the purification of the portion of fume in each cycle and its release into the atmosphere occurred when the selected level of fume purification quality was reached - a decrease in the $CO_2$ concentration in the fume portion by 40÷80%;
- the specified moment of the beginning of the ejection was determined by the drop in the partial pressure of $CO_2$ in the CC (pressure decrease from Q1 stg to the minimal (threshold) pressure Q1 stg Min), and the actual quality of purification was controlled by a $CO_2$ concentration sensor in the purified fume;
- the first stage of carbonization was completed upon reaching the threshold duration of the working cycle, selected from the interval of 20÷60 minutes.

During the second stage of carbonization:

- the pressure of products holding in the CC was set to be greater than the double pressure of the first stage of carbonization - (Q2 stg>2Q1 stg), to ensure the bypass of pre-purified fume from the CC of the second stage to the CC operating in the first stage of carbonization, without any external additional stimulation by the charge compressor;
- a pulsating pressure mode was implemented - a periodic pressure drop from the level Q2 stg to the level (Q2 stg-Q1 stg) in the period of 1÷2 minutes, followed by bringing the pressure to the initial level Q2 stg, however, the pulsations took place with a period equal to the selected threshold duration working cycle of the first stage (from the interval of 20÷30 minutes).

Separate series of measurements are devoted to:

- Comparison of two options for the preparation of the molding mixture when implementing the proposed method: traditional mixing and by repeated compaction by rolling a thick layer with a roller and ripping it in a high-speed roller mixer-activator of cyclic action. In the case of using quick lime, processing in a high-speed mixer-activator was carried out in three options: before and (or) after the completion of slaking, immediately before the products molding. The conditional pressure of the roll on a thick layer of the processed molding mixture was selected from the range of 0.1÷0.5 MPa, and the number of compactions by rolling with subsequent ripping was selected from the range of 150÷600.

- Comparison of the effectiveness of the proposed method in the formation of three options of products: cubes with an edge of 50 mm - solid K and hollow Kp with a hollowness above 30%; solid samples M with a plan size of 50 × 50 mm and a height of 25±1.5 mm.

The analysis of the results of a series of measurements indicates that:

- The proposed two-stage carbonization mode with a low excess fume pressure of the first stage, selected from the interval Q1 stg = 0.3÷0.8 MPa, and high (more than doubled - Q2 stg>2Q1 stg) pressure of the second stage, provides the best performance for all three criteria (Pu, ΔMa $CO_2$ and Cs) at the same Coef, in comparison with one-stage carbonization, both at low-pressure at high-pressure. These advantages were revealed both when using quick lime (series 1 in Table 1) and hydrated lime (series 2 in Table 2), at different levels of Coef (the level of reduction of $CO_2$ concentration selected from the range of 40÷80%) and CC filling coefficient.
- The ejection of purified fume at the end of each working cycle, carried out according to an easily readable screening of a pressure gauge measuring the drop in the partial pressure of $CO_2$ in the CC, made it possible to maintain Coef fairly stable, with deviations not exceeding ±10% from the selected level. This confirms the possibility of using the proposed indirect method for estimating the current value of the $CO_2$ concentration level, which is more efficient and less expensive, in comparison with measuring the mass concentration of $CO_2$ with a sensor.
- The proposed pulsating pressure mode at the second stage of carbonization, from the level Q2 stg to the level (Q2 stg-Q1 stg), has a beneficial effect both on the degree of absorption of $CO_2$ by products (the value ΔMa $CO_2$ was increased by ≈ 10%), and on the process of solidification of products Cs was increased by >5%), compared to the of slowly slightly decreasing pressure mode, without pulsations.
- Increasing the excess fume pressure of the first stage of carbonization above 0.8 MPa and the corresponding augmentation of pressure of the second stage, which significantly increase the cost of implementing the proposed method, did not lead to positive results - changes in indicators for all three criteria (Pu, ΔMa $CO_2$ and Cs) were within the measurement error at the same Coefs.
- Reduction of the excess pressure of the fume of the first stage of carbonization to 0.2 MPa and the pressure of the second stage to 0.45 MPa, in comparison with pressures of 0.3 and 0.7 MPa, reduced Pu, ΔMa $CO_2$ and Cs by 10÷20% caeteris paribus.
- The preparation of the molding mixture by repeated compaction by rolling a thick layer with a roller and its ripping in a high-speed roller mixer-activator, in comparison with traditional mixing, gave better results during most of series. The proposed processing had a particularly pronounced effect on the strength of the samples - the increase in Cs reached 25%. In the case of using quick lime, such processing was especially effective after the slaking was completed, immediately before the products molding. In this option, due to the homogenization and activation of the mixture, in addition to the increase in strength, an increase of more than 10% was also recorded according to the criteria Pu and ΔMa $CO_2$, especially when molding samples with reduced moulding pressure. The main parameters of processing in the mixer-activator (conditional pressure of the roll on the layer of the mixture and the number of compactions-rippings) were set during measurements at the levels indicated for the corresponding series in Table 2.
- When using highly active quick lime, which provides high efficiency of fume purification, with traditional mixing, there is a high probability of product defects in the form of cracks. Processing in a mixer-activator reduces the likelihood of such defects to a minimal.
- The use of products in the form of cubes with an edge of 50 mm for carbonization confirmed the significant advantages of the hollow version in comparison with the solid one. With a hollowness of 35% and Coef = 0.85±3, the levels of all three criteria increased significantly: the productivity of Pu almost increased twice (from 0.14 to 0.27 l/(min·kg)), as did the specific average hourly weight gain of the samples ΔMa $CO_2$. The gain in strength turned out to be the most significant: if in the traditional heat-moisture solidification, hollow products had one and a half times less Cs than solid ones, then, on the contrary, hollow ones are 30% stronger than solid ones during carbonization with the recommended mode.

The data in Table 1 indicate that the implementation of the distinctive features of the proposed method for purification of fume gases from carbon dioxide by carbonizing small-piece moulded products from lime-containing mixtures, using the proposed device for its implementation, allows us to provide higher values the above four indicators of the quality of the implementation of the proposed method, in comparison with the prototype - to increase the integral efficiency of the proposed method for fume purification from $CO_2$ by products carbonization.

In the drawings:

Fig. 1 is a general scheme illustrating the implementation of the proposed method in the case of using slaked lime $Ca(OH)_2$:

1      - Receiver;
2      - Slacker lime bin;
3      - Fine-grained carbonate filler bin;
4      - Additives bin;
5      - Water dispenser;
6      - Lime dispencer;
7      - Fine-grained carbonate filler feeder;
8      - Additives feeder;
9      - Belt batcher;
10    - Conveyor;
11    - Mixer-activator;
12    - Press;
13    - Automatic stacker;
14    - Trolley;
15    - Carbonization chambers;
16    - Drying chambers.

Fig. 2 is a scheme illustrating a device for the implementation of the proposed two-stage carbonization process of products with working cycles of fume purification at a relatively low-pressure at the first stage and a relatively high and pulsating pressure mode at the second stage of carbonization, in the option of fixing the selected boundary $CO_2$ concentration in the fume by falling partial pressure of $CO_2$ in a hermetic CC:

1                                   - Fume receiver;

17, 19, 21, 25, 27, 31, 32, 35     - Lockup valves;

18                                  - Inlet Pipeline;

20, 33                              - Reducing valves;

22                                  - Outlet pipeline;

23                                  - $CO_2$ measuring unit;

24                                  - High-pressure gauge;

26                                  - Low-pressure gauge;

28                                  - Additional pipeline;

29, 30                              - Conjunctive lines;

34                                  - Line;

36                                  - Compressed air receiver;

37                                  - Blowing machine.

Fig. 3 is a general scheme that describes the implementation of the proposed method, in the option of using CaO quicklime, a silo reactor and an activator mixer before products molding:

1      - Receiver;

2      - Quick lime bin;

3      - Fine-grained carbonate filler bin;

4      - Additives bin;

5      - Water dispenser;

6      - Lime dispencer;

7      - Fine-grained carbonate filler feeder;

8      - Additives feeder;

9      - Belt batcher;

10      - Conveyor;

11      - Mixer-activator;

12      - Press;

13      - Automatic stacker;

14      - Trolley;

15      - Carbonization chambers;

16      - Drying chambers.

17      - Mixer;

18      - Elevator;

19      - Silo-reactor;

20      - Carriage.

Fig. 4 is a scheme of mixer-activator for the preparation of the molding mixture by repeated compaction of a thick layer by rolling with a roller, followed by ripping:

45      - Casing;

46      - Fixerd plate;

47      - Cone-shaped roll;

48      - Vertical driver shaft;

49      - Rippers;

50      - Hinged discharge cover;

51      - Water supply system;

$R^{CP}$    - an average radius of tapered rolls;

B       - a width of tapered rolls.

**Claims**

1. A method for purification of fume gases from carbon dioxide ($CO_2$) by carbonizing small-piece moulded products from lime-containing mixtures, which includes preparing a molding mixture, molding small-piece moulded products on a press and purification of fume gases compressed to the required pressure and placed in the receiver, by absorbing $CO_2$ from the fume gases during the solidification of small-piece moulded products in a hermetic carbonization chamber, **characterized in that** carbonization is conducted in at least two carbonization chambers (CCs) in two stages:

   - at the first stage of intensive purification, a series of working cycles is conducted, each of which includes supplying a portion of fume gases in CC, that is filled with small-piece moulded products, with an overpressure selected from the interval Q1 stg = 0.3÷0.8 MPa, holding until reaching the level of reduction in the $CO_2$ concentration in the fume gases selected from the interval 40÷80%, and ejection of the purified portion of fume gases into the atmosphere, the first stage is completed upon reaching the duration of one working cycle selected in advance from the interval of 20-60 minutes;
   - at the second stage, the small-piece moulded products are kept in the CC while maintaining the pressure that is more than twice higher (Q2 stg>2Q1 stg) in comparison with the pressure at the first stage of carbonization, with periodic bypassing of fume gases into the CC in which the first stage of carbonization is carried out, and the preparation of the molding mixture is produced by repeated compaction by rolling a thick layer with a roll and its ripping in a high-speed roller mixer-activator of cyclic action, and the moulded small-piece moulded products are hollow with a hollowness of at least 20%.

2. The method of purification of fume gases, according to claim 1, **characterized in that** it provides the fixation of the selected boundary concentration of $CO_2$ in fume gases for generating a signal for ejection of the purified portion of fume gases into the atmosphere which is conducted by the drop in the partial pressure of $CO_2$ in a hermetic CC.

3. The method of purification of fume gases, according to claim 1, **characterized in that** when using quick lime, the processing of the molding mixture (additional moistening, mixing and activation) in a high-speed roller mixer-activator of cyclic action is conducted after the completion of slaking, immediately before molding small-piece moulded products on the press, and the conditional pressure of the roll on a thick layer of the processed molding mixture (moulding force divided by the average radius and width of the roll) is selected from the range of 0.1÷0.5 MPa, and the number of cycles of compaction by rolling with subsequent ripping is selected from the range of 150÷600.

4. A device for implementing a method for purification of fume gases from carbon dioxide ($CO_2$) by carbonizing small-piece moulded products from lime-containing mixtures according to claims 1-3, comprising at least two hermetic carbonization chambers connected by pipelines to a receiver compressed to the required pressure of fume gases and a pipe for ejecting purified fume gases into the atmosphere, **characterized in that** it has an additional pipeline connecting all hermetic carbonization chambers, each of which is connected to an additional pipeline (28) by two connecting lines equipped with lockup valves (29, 30), and one of each pair of connecting lines is equipped with an additional pressure reducing valve (32, 33).

**Fig. 1**

Fig. 2

**Fig. 3**

Fig. 4

Europäisches
Patentamt

European
Patent Office

Office européen
des brevets

**EUROPEAN SEARCH REPORT**

Application Number

EP 22 00 0101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/177220 A1 (SANT GAURAV [US] ET AL) 13 June 2019 (2019-06-13) * figure 4C * | 1-4 | INV. B01D53/14 C04B18/16 C04B28/10 |
| A | EP 2 276 714 B1 (CARBSTONE INNOVATION NV [BE]) 18 April 2018 (2018-04-18) * paragraphs [0006], [0175] * | 1-4 | C04B40/02 C04B40/00 C04B7/36 |
| A | CN 106 747 176 A (UNIV SOUTHEAST) 31 May 2017 (2017-05-31) * example 4 * | 1-4 | ADD. C04B111/00 |
| A | WANG TAO ET AL: "Accelerated mineral carbonation curing of cement paste for CO2 sequestration and enhanced properties of blended calcium silicate", CHEMICAL ENGENEERING JOURNAL, ELSEVIER, AMSTERDAM, NL, vol. 323, 19 April 2017 (2017-04-19), pages 320-329, XP085024721, ISSN: 1385-8947, DOI: 10.1016/J.CEJ.2017.03.157 * paragraph [3.2.1] * | 1-4 | |

TECHNICAL FIELDS
SEARCHED (IPC)

B01D
C04B

The present search report has been drawn up for all claims

| Place of search | Date of completion of the search | Examiner |
|---|---|---|
| Munich | 3 May 2023 | Pasanisi, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 00 0101

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| US 2019177220 | A1 | 13-06-2019 | US 2019177220 | A1 | 13-06-2019 |
| | | | US 2022204401 | A1 | 30-06-2022 |
| EP 2276714 | B1 | 18-04-2018 | AU 2009242105 | A1 | 05-11-2009 |
| | | | BR PI0907654 | A2 | 19-07-2016 |
| | | | CA 2722724 | A1 | 05-11-2009 |
| | | | CN 102083771 | A | 01-06-2011 |
| | | | DK 2276714 | T3 | 25-06-2018 |
| | | | EP 2276714 | A2 | 26-01-2011 |
| | | | ES 2674364 | T3 | 29-06-2018 |
| | | | HR P20180891 | T1 | 10-08-2018 |
| | | | HU E037784 | T2 | 28-09-2018 |
| | | | LT 2276714 | T | 10-07-2018 |
| | | | PL 2276714 | T3 | 28-09-2018 |
| | | | PT 2276714 | T | 25-06-2018 |
| | | | RU 2010143734 | A | 10-06-2012 |
| | | | SI 2276714 | T1 | 31-08-2018 |
| | | | TR 201807932 | T4 | 21-06-2018 |
| | | | UA 101366 | C2 | 25-03-2013 |
| | | | US 2011165400 | A1 | 07-07-2011 |
| | | | WO 2009132692 | A1 | 05-11-2009 |
| | | | WO 2009133120 | A2 | 05-11-2009 |
| CN 106747176 | A | 31-05-2017 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 20182673485
- RU 20152549258

- EP 2276714 A

**Non-patent literature cited in the description**

- **AKHMETOVA, V. R. ; SMIRNOV, O. V.** Carbon dioxide capture and storage - problems and perspectives. *Bashkir Chemical Journal,* 2020, vol. 27 (3), 103-115

- **SHAM, P.I.** Vliyanie uglekislogo gaza atmosfery Zemli na poteplenie klimata [Influence of carbon dioxide of The earth's atmosphere on climate warming. *Vestnik Priazovskogo Gosudarstvennogo Tekhnicheskogo Universiteta [Bulletin of Priazovsk State Technical University,* 2003, (13), 89-95